(19)

**Europäisches Patentamt**
**European Patent Office**
**Office européen des brevets**

(11)  **EP 2 287 057 B1**

(12)  **EUROPEAN PATENT SPECIFICATION**

(45) Date of publication and mention
of the grant of the patent:
**09.03.2016  Bulletin 2016/10**

(51) Int Cl.:
*B60T 8/172* *(2006.01)*        *B60T 8/1755* *(2006.01)*

(21) Application number: **10171639.7**

(22) Date of filing: **02.08.2010**

(54) **Yaw angular velocity measuring method**

Gierwinkelgeschwindigkeitsmessverfahren

Procédé de mesure de la vitesse angulaire de lacet

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority:  **18.08.2009  TR 200906349**

(43) Date of publication of application:
**23.02.2011  Bulletin 2011/08**

(73) Proprietor: **Tofas Turk Otomobil Fabrikasi Anonim Sirketi**
**16369 Bursa (TR)**

(72) Inventors:
• **Efendioglu, Baris**
**16369, BURSA (TR)**
• **Guvenc, Levent**
**34758 ISTANBUL (TR)**
• **Guvenc Aksun, Bilin**
**34758 ISTANBUL (TR)**
• **Kahraman, Kerim**
**16983 BURSA (TR)**
• **Senturk, Mutlu**
**34408, ISTANBUL (TR)**
• **Emirler, Tolga**
**34347 ISTANBUL (TR)**

(74) Representative: **Dericioglu Kurt, Ekin**
**Ankara Patent Bureau Limited**
**Bestekar Sokak No: 10**
**Kavaklidere**
**06680 Ankara (TR)**

(56) References cited:
**EP-A2- 0 711 699          WO-A1-95/26285**
**WO-A1-02/058976          FR-A1- 2 899 189**
**US-A1- 2001 044 688**

**Description**

**Field of the Invention**

The present invention relates to a yaw angular-velocity (yaw rate) measuring method which is used for measuring the yaw angular-velocity of vehicles.

**Background of the Invention**

Use of active safety systems in vehicles has increased nowadays in parallel with development of technology. Standardization is desired in use of these safety systems. But cost of these safety systems is quite high.

Yaw angular-velocity of a vehicle is an important parameter in development of safety systems. Yaw angular-velocity of the vehicle should be measured in activation of the safety system enabling the vehicle to become balanced again by preventing it from yawning.

Yaw angular-velocity of the vehicle is usually measured with a yaw angular-velocity sensor which is a kind of gyroscope. However cost of this sensor is more than other sensors.

The Unites States patent document no. US2003042790 and the Japanese patent document no. JP2006088960, applications in the state of the art, disclose methods which are used for measuring the yaw angular-velocity and don't comprise a yaw angular-velocity sensor.

The International patent document no. WO02058976 discloses a yaw rate (yaw angular-velocity) measurement system and method.

Cost of the yaw angular-velocity sensor which is used for measuring the yaw angular-velocity today is high and also there is no mechanism which will control it when it's broken. In other methods used for measuring the yaw angular-velocity, difficulties occur in adaptation to each brake system or the said methods can't be used for testing the accuracy of the other sensors.

**Summary of the Invention**

The objective of the present invention is to realize a yaw angular-velocity measuring method which enables measuring the yaw angular-velocity.

A further objective of the present invention is to realize a yaw angular-velocity measuring method which reduces the costs in measuring the yaw angular-velocity.

These objectives are achieved by the features combination of independent claim 1.

**Detailed Description of the Invention**

A yaw angular-velocity measuring system realized to fulfill the objectives of the present invention is illustrated in the accompanying figures, in which:

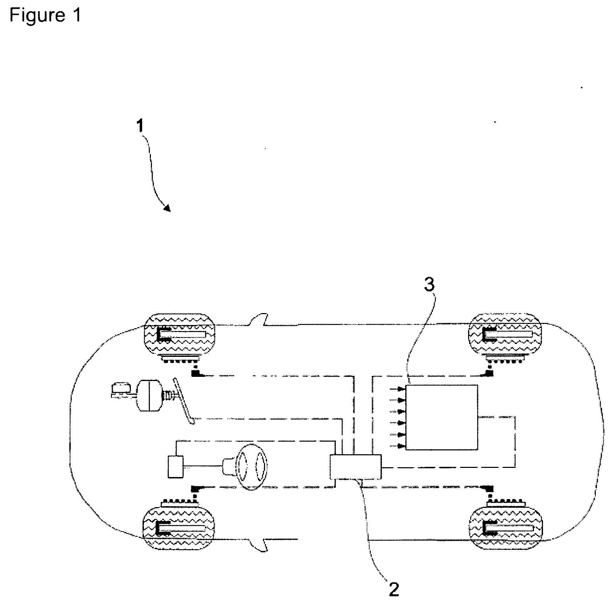

Figure 1 is the view of the virtual sensor provided in the inventive yaw angular-velocity measuring system, as integrated to the vehicle.

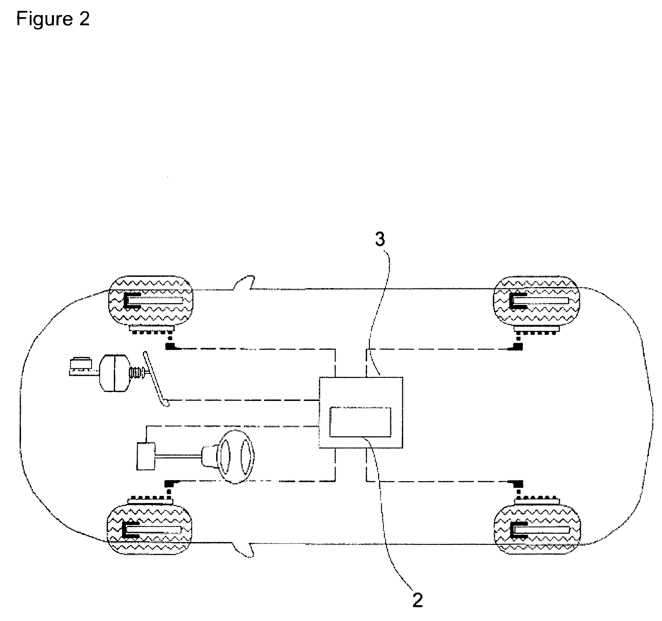

Figure 2 is the view of the virtual sensor provided in the inventive yaw angular-velocity measuring system, as embedded into the ESP ECU.

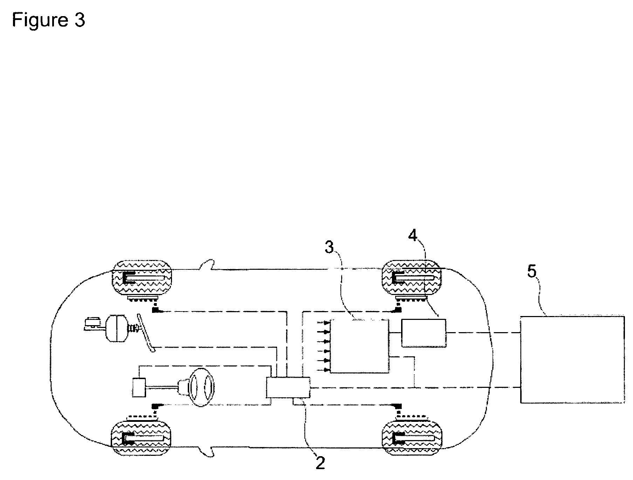

Figure 3 is the view of the error/fault detection block provided in the inventive yaw angular-velocity measuring system, as integrated to the vehicle.

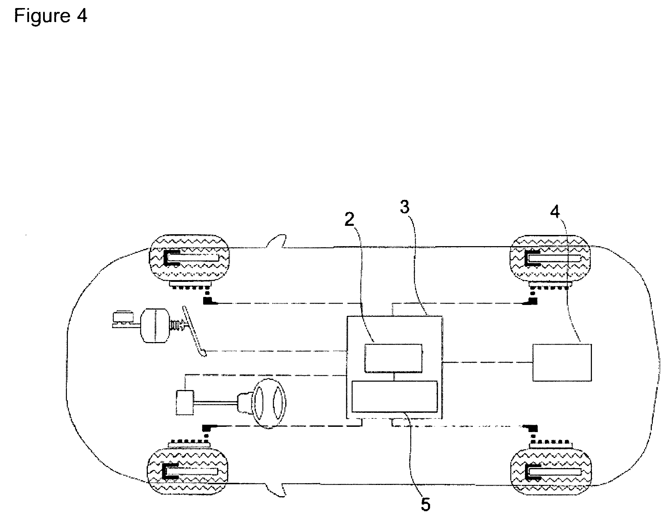

Figure 4 is the view of the virtual sensor and the error/fault detection block provided in the inventive yaw angular-velocity measuring system, as embedded into the ESP ECU.

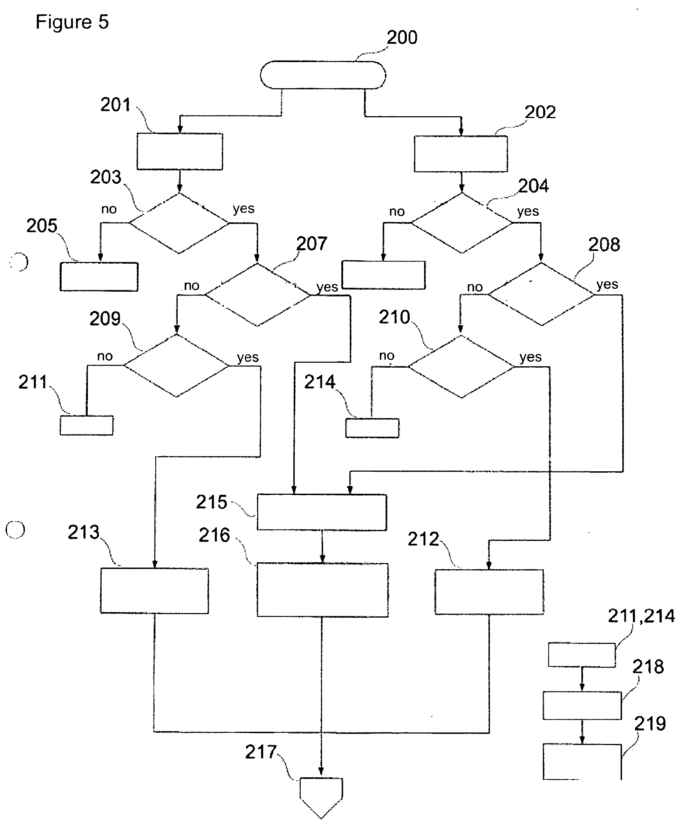

Figure 5 is the flow diagram showing the selection of the wheels angular velocity information of which will be used in the inventive yaw angular-velocity measuring system.

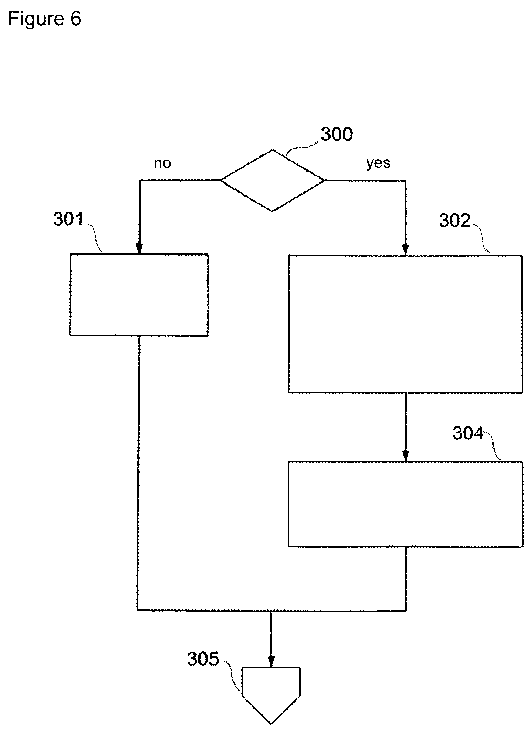

Figure 6 is the flow diagram showing the estimation of yaw angular-velocity from the rear wheels in the inventive yaw angular-velocity measuring system.

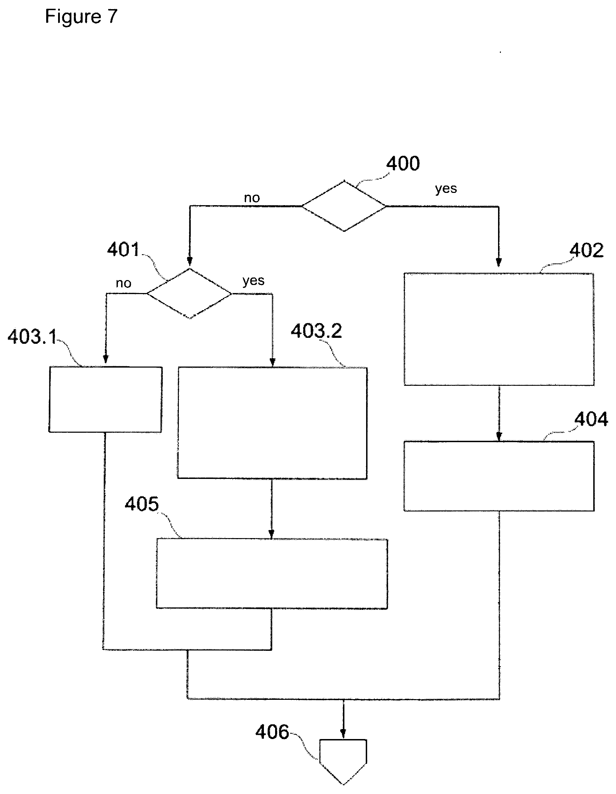

Figure 7 is the flow diagram showing the estimation of yaw angular-velocity from the front wheels in the inventive yaw angular-velocity measuring system.

Figure 8 is the schematic view of the yaw angular-velocity sensor which is improved by getting the yaw angular-velocity estimation obtained by a kinematic method, through dynamic observer in the inventive yaw angular-velocity measuring system.

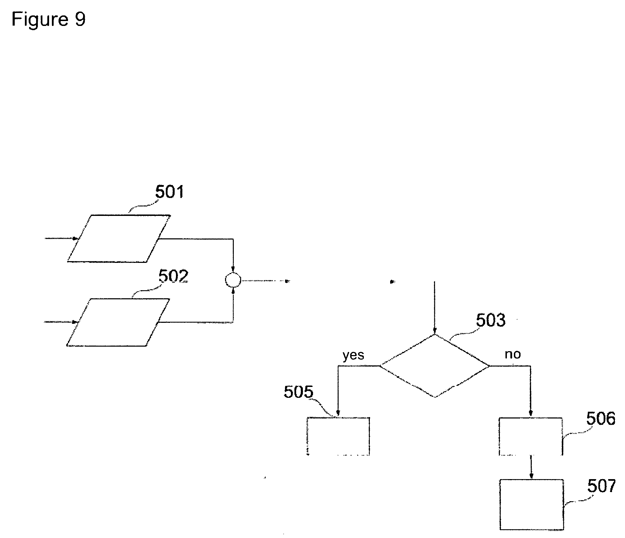

Figure 9 is the flow chart of the error signal which will be generated when the real sensor is broken in the inventive yaw angular-velocity measuring system.

The components given in the figures are individually numbered where the numbers refer to the following:

  1- Yaw angular-velocity measuring system
  2- Virtual sensor
  3- ESP-ECU (Electronic Stability Program and Electronic Control Unit)
  4- Yaw angular-velocity sensor
  5- Fault detection block
  K.T: Kinematic estimation
  D.T: Dynamic estimation

The yaw angular-velocity measuring system (1) estimating the yaw angular-velocity of the vehicle essentially comprises:

  -    steering angle sensor and wheel speed sensors which are available in the vehicle,
  -    at least one virtual sensor (2) which has a microprocessor that measures the yaw angular-velocity of the vehicle by processing the data that it receives from the steering angle sensor and the wheel speed sensors,
  -    ESP-ECU (3) which control the wheels according to the data that it receives from the virtual sensor (2).

In another embodiment of the invention, in order to control the accuracy of the system (1) the said invention cooperates with:

  -    at least one yaw angular-velocity sensor (4) which is available in the vehicle and measures the yaw angular-velocity independently of the system (1) and
  -    fault detection block (5) which compares the data of the virtual sensor (2) and the yaw angular-velocity sensor (4) and generates error signal if they are above a certain limit.

In order that the virtual sensor (2) carries out the yaw angular-velocity measurement the followings are needed:

  -    vehicle speed information which is received by the virtual sensor (2),
  -    dynamic wheel radius information which is received by the virtual sensor (2),
  -    information of front and rear track widths of the vehicle, mass of the vehicle, distance data from centre of mass to the front and rear axle which are entered before the system (1) starts to operate,
  -    information of steering ratio between the steering wheel and the wheel which is received by the virtual sensor (2),
  -    estimation of yaw angular-velocity of the rear wheels which is carried out by the virtual sensor (2),
  -    estimation of yaw angular-velocity of the front wheels which is carried out by the virtual sensor (2).

Steps of angular-velocity information use and wheels' selection in the inventive system (1) are carried out in two processes, namely receiving estimation from the front wheels and receiving estimation from the rear wheels. Receiving estimation from the front wheels which is the first process comprises the steps of:

  -    receiving estimation of the previous yaw angular-velocity (200),
  -    receiving estimation of the yaw angular-velocity from the front wheels (201),
  -    controlling the wheel's speed sensor information (203),
  -    giving failure warning of the front wheels if the wheel's speed sensor information aren't correct (205),
  -    controlling whether the information received and the vehicle speed difference is within the predetermined tolerances if the information received from the wheel speed sensor are correct (207),
  -    controlling whether there is an estimation from the rear wheels if the information received and the vehicle speed information aren't within the certain fault tolerance (209),
  -    approving that that there is no estimation if there isn't estimation from the rear wheels (211),
  -    making estimation only from the rear wheels if there is estimation from the rear wheels (213),
  -    combining the front and rear wheel estimations at a certain extent if the information received and the vehicle speed difference is within the certain fault tolerance (215).

Receiving estimation from the rear wheels which is the second process comprises the steps of:

  -    receiving estimation of the previous yaw angular-velocity (200),
  -    receiving estimation of the yaw angular-velocity from the rear wheels (202),
  -    controlling whether correct information is received from the wheel speed sensor (204),

- giving failure warning of the rear wheels if the wheel's speed sensor information aren't correct (206),
- controlling whether the information received and the vehicle speed difference is within the predetermined fault tolerance if the wheel's speed sensor information are correct (208),
- controlling whether there is an estimation from the front wheels if the information received and the vehicle speed difference isn't within the certain tolerance values (210),
- approving that that there is no estimation if there isn't estimation from the front wheels (214),
- making estimation only from the front wheels if there is estimation from the front wheels (212),
- combining the front and rear wheel estimations at a certain extent if the information received and the vehicle speed difference is within the certain fault tolerance (215).

Estimation is obtained from the front and rear wheels by combining the estimations received from the front and rear wheels (216). It's gone back to the beginning after the estimation process is carried out (217).

When there isn't estimation from the front and rear wheels the ESP is deactivated (218) and the driver is warned by service light flashing (219).

In the inventive system (1), estimation of yaw angular-velocity from the front wheels (201) comprises the steps of:

- controlling whether braking is performed (400),
- controlling whether there is skidding if there isn't braking (401),
- estimating the yaw angular-velocity if there isn't skidding (403.1),
- going back to the beginning after the angular-velocity estimation (406),
- calculating the longitudinal sliding values ($S_1$ and $S_2$) at the front wheels by taking the rolling and longitudinal sliding values into consideration if there is skidding (403.2),
- estimating the yaw angular-velocity (405),
- going back to the beginning after the angular-velocity estimation (406),
- calculating the $S_1$ and $S_2$ values by taking the rolling and longitudinal sliding values into consideration if braking is performed (402),
- estimating the yaw angular-velocity (404),
- estimating the yaw angular-velocity (404).

In the inventive system (1), estimation of yaw angular-velocity from the rear wheels (202) comprises the steps of:

- controlling whether braking is performed (300),
- estimating the yaw angular-velocity if there isn't braking (301),
- going back to the beginning after estimating the yaw angular-velocity (305),
- calculating the longitudinal sliding values ($S_1$ and $S_2$) at the rear wheels by taking the rolling and longitudinal sliding values into consideration if braking is performed (302),
- estimating the yaw angular-velocity (304),
- going back to the beginning after estimating the yaw angular-velocity (305).

The data of the virtual sensor (2) and the data of the yaw angular-velocity sensor (4) are compared in the fault detection block (5). Error signal is generated if the data coming from the yaw angular-velocity sensor (4) are more than the tolerance values of the data coming from the virtual sensor (2).

In the inventive system, when comparing the data of the virtual sensor (2) and the yaw angular-velocity sensor (4) the fault detection block (5) follows the steps of:

- receiving the measurement value obtained from the yaw angular-velocity sensor (4) (501),
- receiving the measurement value obtained by the virtual sensor (2) (502),
- controlling whether the error value is within the tolerance limits by comparing the measurement value and the estimation value (503),
- the system (1) continuing to operate if the error values are within certain tolerance limits (505),
- flashing the service light if the error value isn't within certain tolerance limits (506),
- continuing use the virtual sensor (2) upon the service light flashes (506) or deactivating the ESP (507).

When there is a difference more than the specified tolerance between the yaw angular-velocity sensor (4) and the virtual sensor (2), the fault detection block (5) enables the ESP-ECU (3) using the data of yaw angular-velocity to be deactivated and the data coming from the virtual sensor (2) to be used.

The inventive system (1) enables to measure the yaw angular-velocity of the vehicle utilizing the sensors which are available therein in measuring the yaw angular-velocity of the vehicle. This enables the yaw angular-velocity measurement cost of the vehicle to be reduced and helps standardization of the vehicle control systems. In addition, it is ensured to control the errors that may occur in the yaw angular-velocity sensor (4) and warn the driver by the help of the virtual sensor (2) which can be used simultaneously with the yaw angular-velocity sensor (4) available in the vehicle.

With the inventive system, the yaw angular-velocity of the vehicle can be obtained both by kinematic estimation (K.T) and dynamic estimation (D.T). In the preferred embodiment of the invention, the data received from the sensors available in the vehicle are used during kinematic measurement in vehicles comprising ESP (Electronic Stability Program). These data are the data coming from the steering angle sensor and the data coming from the wheel speed sensors. Other information necessary for kinematic measurement to be carried out are: vehicle speed, angular-velocity of each wheel, dynamic wheel radius, front and rear track widths of the vehicle, distances from centre of mass to the front and rear axle, steering angle at wheel level, mass of the vehicle and steering ratio between the steering wheel and the wheel.

The yaw angular-velocity estimation of the vehicle can be made in a combined way both as kinematic (K.T) and dynamic (D.T). The yaw angular-velocity estimation is made from both the front wheels and the rear wheels in the kinematic estimation (K.T). Whereas in the dynamic estimation (D.T), an observer obtained from the vehicle model is used and the dynamic estimation (D.T) is made from the data obtained from this observer.

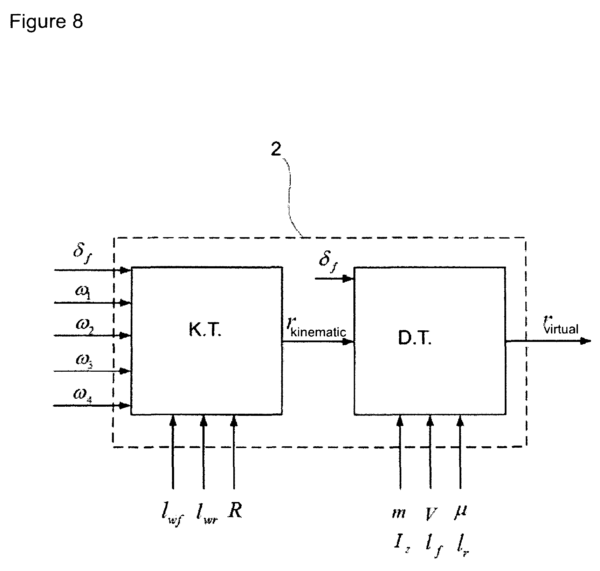

Vehicle speed $V$ necessary for kinematic measurement to be made is obtained. Dynamic wheel radius R another necessary data is obtained. Front wheel track width data $l_{wf}$ and the rear wheel track width data $l_{wr}$, of the vehicle, mass data $m$ of the vehicle, data of distance from centre of mass to the front axle $l_f$ and distance from centre of mass to the rear axle $l_r$, data of steering angle at wheel level $\delta_f$, data of right front wheel's angular-velocity $w_2$, data of left front wheel's angular-velocity $w_1$, data of right rear wheel's angular-velocity $w_4$, data of left rear wheel's angular-velocity $w_5$ are obtained. The data necessary for kinematic measurement are obtained by taking the data of steering ratio between the steering wheel and the wheel $\alpha$. These data are used for measuring the yaw angular-velocity of the vehicle kinematically. These data are data which are detected by the sensors and the detectors available in the vehicle and sent to the virtual sensor (2) (Figure 8).

Different calculations are used in estimating the angular velocity in accordance with whether braking is performed in estimation of the yaw angular-velocity of the rear wheels (202). If there is no braking a more simple calculation is in question (301). Angular-velocities of the rear wheels ($w_3$,$w_4$), dynamic wheel radius (R) and rear wheel track width ($l_{wr}$) are used as parameter in this calculation. In this case, the yaw angular-velocity is found by dividing the multiplication of the angular-velocity difference between the rear wheels with the dynamic wheel radius into the rear wheel track width.

$$r = \frac{\omega_3 R - \omega_4 R}{l_{wr}}$$

If braking is performed more complex calculations are in question in estimation of the angular-velocity (302). Angular-velocities of the rear wheels ($w_3$,$w_4$), vehicle speed (V), rear wheel track widths ($l_{wr}$) and a previous time ($t-\Delta t$) are used as parameter in this calculation. Longitudinal sliding amount ($S_3$ and $S_4$) at the wheels are calculated at first in the calculation (302).

$$s_3 = \frac{\omega_3 R - \left[V + \left(l_{wr}/2\right)r\left(t - \Delta t\right)\right]}{V + \left(l_{wr}/2\right)r\left(t - \Delta t\right)}$$

$$s_4 = \frac{\omega_4 R - \left[V - \left(l_{wr}/2\right)r\left(t - \Delta t\right)\right]}{V - \left(l_{wr}/2\right)r\left(t - \Delta t\right)}$$

The yaw angular-velocity estimation of the rear wheels (304) is made from the data obtained (304).

$$r = \frac{r\left(t - \Delta t\right) - \left[V\left(s_3 - s_4\right)/l_{wr}\right]}{1 + \left(\dfrac{s_3 + s_4}{2}\right)}$$

Different calculations are used whether braking is performed (400), in estimation of the front wheels' yaw angular-velocity (201). If braking isn't performed it is firstly controlled whether the front wheels of the vehicle skidded (401). If the front wheels of the vehicle didn't skid, a more simple calculation is used in estimation of yaw angular-velocity from the front wheels' (403.1) and angular-velocities of the front wheels ($w_1,w_2$), dynamic wheel radius (R) and front wheel track width ($l_{wf}$) are used as parameter in this calculation. In this case, the yaw angular-velocity is found by dividing the multiplication of the angular-velocity difference between the front wheels with the dynamic wheel radius into the front wheel track width.

$$r = \frac{\omega_1 R - \omega_2 R}{l_{wf}}$$

If the vehicle didn't brake but it skidded, more different calculations are in question. In this case, longitudinal sliding amount at the front wheels ($S_1$ and $S_2$) are calculated at first (403.2):

$$s_1 = \frac{\omega_1 R - \left[ V + \left( l_{wf}/2 \right) \cos \delta_f \ r \left( t - \Delta t \right) \right]}{\omega_1 R}$$

$$s_2 = \frac{\omega_2 R - \left[ V - \left( l_{wf}/2 \right) \cos \delta_f \ r \left( t - \Delta t \right) \right]}{\omega_2 R}$$

The yaw angular-velocity estimation of the front wheels is made using the results obtained (405).

$$r = \frac{r \left( t - \Delta t \right)\left( 1 - s_1 \right)\left( 1 - s_2 \right) + \left[ V \left( s_2 - s_1 \right) \Big/ \left( l_{wf} \cos \delta_f \right) \right]}{1 - \left( \dfrac{s_1 + s_2}{2} \right)}$$

If braking was performed, values of longitudinal sliding amount at the front wheels ($S_1$ and $S_2$) (402) are calculated at first:

$$s_1 = \frac{\omega_1 R - \left[ V + \left( l_{wf}/2 \right) \cos \delta_f \ r \left( t - \Delta t \right) \right]}{V + \left( l_{wf}/2 \right) \cos \delta_f \ r \left( t - \Delta t \right)}$$

$$s_2 = \frac{\omega_2 R - \left[ V - \left( l_{w_f}/2 \right) \cos \delta_f \ r \left( t - \Delta t \right) \right]}{V - \left( l_{w_f}/2 \right) \cos \delta_f \ r \left( t - \Delta t \right)}$$

Then, the yaw angular-velocity estimation of the front wheels is made using the $S_1$ and $S_2$ values (404):

$$r = \frac{r \left( t - \Delta t \right) + \left[ V \left( s_1 - s_2 \right) \Big/ \left( l_{wf} \cos \delta_f \right) \right]}{1 + \left( \dfrac{s_1 + s_2}{2} \right)}$$

It is decided how to select the wheels using the data of angular velocity. Upon receiving estimation from the front wheels (201) it is controlled whether the data coming from the wheel speed sensor are correct (203). Failure warning regarding the front wheels is made if the data coming from the wheel speed sensor aren't correct (205), If the data received from the wheel speed sensor are correct it is controlled whether the sensor information and the vehicle speed difference are within the predetermined fault tolerance (207). If the information received from the wheel speed sensor and the vehicle speed difference aren't within a certain fault tolerance it is controlled whether there is angular velocity estimation regarding the rear wheels (209). If there isn't estimation from the rear wheels it is approved that that there is no estimation (211). If the information received from the wheel speed sensor and the vehicle speed difference aren't within a certain fault tolerance and there is yaw angular-velocity speed estimation regarding the rear wheels, only estimation is made from the data belonging to the rear wheels (213). Upon receiving estimation from the rear wheels (202) it is controlled whether the data coming from the wheel speed sensor are correct (204). If the wheel speed sensor information aren't correct failure warning regarding the rear wheels is made (206). If the data of wheel speed sensor are correct it is controlled whether this information and the vehicle speed difference are within the certain fault tolerance (208). If the wheel speed sensor information and the vehicle speed difference aren't within fault tolerance it is controlled whether there is yaw angular-velocity data regarding the front wheels (210). If there isn't yaw angular-velocity data regarding the front wheels it is approved that there isn't estimation from the front wheels (214). If the wheel speed sensor information and the vehicle speed difference aren't within fault tolerance and there is yaw angular-velocity speed estimation regarding the rear wheels, yaw angular-velocity speed estimation is made only from the data belonging to the front wheels (212). If there is yaw angular-velocity speed estimation regarding the front and rear wheels, sensor information belonging to each wheel is correct and the data coming from the sensors and the vehicle speed difference are within fault tolerance; the yaw angular-velocity estimations of the front and rear wheel are combined at a certain extent (215). Yaw angular-velocity estimation is made utilizing these data combined. If there isn't yaw angular-velocity speed data belonging to the front and rear wheels, in other words it is confirmed that there isn't estimation from both the front wheels and the rear wheels (211,214) the ESP is deactivated by the ECU (218). In case that the ESP is deactivated, the service light flashes and the driver is warned (219).

The data sent to the microprocessor located in the virtual sensor (2) are evaluated by the microprocessor. One of these evaluations is to carry out the yaw angular-velocity estimation of the rear wheels. Another evaluation is to carry out the yaw angular-velocity estimation of the front wheels. In the preferred embodiment of the invention, a front-wheel drive vehicle is considered and while estimating the yaw angular-velocity of the front wheels not only the braking but also probability of longitudinal sliding in case of forward driving is taken into consideration.

Kinematic measurement is carried out by taking the sliding amounts of the wheels occurring in the longitudinal axis into consideration in the event of the vehicle's sudden braking or sudden acceleration. Kinematic measurement can be carried out when the wheel speed sensor in one of the front wheels and the rear wheels doesn't operate or doesn't produce data. In this case, there is a logic circuit in order that kinematic measurement is carried out. By means of the said logic circuit, angular-velocity information received from the sensors of the rear wheels are used as data when useful information isn't produced from the sensors of the front wheels (for example, in case that the wheel skids or is locked). If no useful information comes from the sensors of the rear wheels (in case that the wheel skids or is locked) angular-velocity data coming from the sensors of the front wheels are used. Driving safety of the vehicle is improved by carrying out kinematic measurement in such cases too.

The virtual sensor (2) can be used independently of the ESP_ECU (3) and also can be embedded into the electric control unit of the vehicle as software. Thus less components are used. This reduces the costs further.

In another embodiment of the invention, the virtual sensor (2) and the yaw angular-velocity sensor (4) are used together in the vehicle. In this case, the virtual sensor (2) is used for supervision and control tasks and the virtual sensor (2) and the yaw angular-velocity sensor (4) operate independently of each other. The virtual sensor (2) and the yaw angular-velocity sensor (4) make their own estimations. Data received from the virtual sensor (2) and the yaw angular-velocity sensor (4) are compared in the fault detection block (5). The fault detection block (5) compares the data received and as a result of this comparison, it ensures to warn the driver by deactivating the yaw angular-velocity sensor (4) in the event that the difference between the virtual sensor (2) and the yaw angular-velocity sensor (4) is beyond the predetermined tolerance limits. In this case, it is started to use the virtual sensor (2) instead of the yaw angular-velocity sensor (4).

In a further embodiment of the invention, the fault detection block (5) and the virtual sensor (2) are embedded into the electronic control unit (ECU) of the vehicle. This provides space and material saving. Thus, saving is achieved in terms of cost.

In dynamic measurement, an observer obtained from the vehicle model is used. Calculations of the observer may be affected by the changes in the vehicle speed. Therefore a speed change based observer is used. The vehicle speed is used as a variable parameter in the observer matrices and for each speed value, the observer matrices and the observer gains are calculated real-timely.

In the said invention, the data received with kinematic measurement are filtered by being passed though the dynamic observer. Thus the measurement carried out is improved and the potential error rate is minimized. This provides an advantage in terms of security and also improves the quality of the measurements carried out.

Within the scope of these basic concepts, it is possible to develop various embodiments of the inventive yaw

**EP 2 287 057 B1**

angular-velocity measuring system (1). The invention can not be limited to the examples described herein; it is essentially according to the claims.

**Claims**

1. A yaw angular velocity measuring method, which enables to select the wheels whose angular velocity information is going to be used, and which is carried out in two processes, and **characterized by** the steps of

   - receiving estimation of the yaw angular-velocity from the front wheels (201),
   - controlling the wheel's speed sensor information (203),
   - giving failure warning of the front wheels if the wheel's speed sensor information aren't correct (205),
   - controlling whether the difference between the information received and the vehicle speed is within certain tolerances if the information received from the wheel speed sensor are correct (207),
   - controlling whether there is an estimation from the rear wheels if the information received and the vehicle speed information aren't within the certain fault tolerance (209),
   - approving that that there is no estimation if there isn't estimation from the rear wheels (211),
   - making estimation only from the rear wheels if there is estimation from the rear wheels (213),
   - combining the front and rear wheel estimations at a certain extent if the difference between the information received and the vehicle speed is within the certain fault tolerance (215),
   - receiving estimation of the yaw angular-velocity from the rear wheels (202),
   - controlling whether correct information is received from the wheel speed sensor (204),
   - giving failure warning of the rear wheels if the wheel's speed sensor information aren't correct (206),
   - controlling whether the difference between the information received and the vehicle speed is within the fault tolerance if the wheel's speed sensor information are correct (208),
   - controlling whether there is an estimation from the front wheels if the difference between the information received and the vehicle speed isn't within the certain tolerance values (210),
   - approving that that there is no estimation if there isn't estimation from the front wheels (214),
   - making estimation only from the front wheels if there is estimation from the front wheels (212),
   - combining the front and rear wheel estimations at a certain extent if the difference between the information received and the vehicle speed is within the certain fault tolerances (215).

2. A yaw angular-velocity measuring method (1) according to Claim 1, **characterized in that** the step of receiving estimation of the yaw angular-velocity from the rear wheels (202) comprises the sub-steps of

   - controlling whether braking is performed (300),
   - estimating the yaw angular-velocity if there isn't braking (301),
   - going back to the beginning after estimating the yaw angular-velocity (305),
   - calculating the longitudinal sliding values ($S_3$ and $S_4$) at the rear wheels if braking is performed (302),
   - estimating the yaw angular-velocity (304),
   - going back to the beginning after estimating the angular-velocity (305).

3. A yaw angular-velocity measuring method according to Claim 1, **characterized in that** the step of receiving estimation of the yaw angular-velocity from the front wheels (201) comprises the sub-steps of

   - controlling whether braking is performed (400),
   - controlling whether there is skidding if there isn't braking (401),
   - estimating the yaw angular-velocity if there isn't skidding (403.1),
   - going back to the beginning after the angular-velocity estimation (406),
   - calculating the longitudinal sliding values ($S_1$ and $S_2$) at the front wheels if there is skidding (403.2),
   - estimating the yaw angular-velocity (405),
   - going back to the beginning after the angular-velocity estimation (406),
   - calculating the $S_1$ and $S_2$ values if braking is performed (402),
   - estimating the yaw angular-velocity (404),
   - going back to the beginning after the angular-velocity estimation (406).

**Patentansprüche**

1. Ein Gierwinkelgeschwindigkeitsmessverfahren zum Wählen der Räder, deren Winkelgeschwindigkeitsinformation angewendet werden soll und welches in zwei Prozessen durchgeführt wird und **gekennzeichnet durch** die Verfahrensschritte,

   - Empfangen der Abschätzung der Gierwinkelgeschwindigkeit von Vorderrädern (201),
   - Kontrollieren der Geschwindigkeitssensor-Information des Rades (203),
   - Auslösen einer Fehlerwarnung hinsichtlich der Vorderräder, wenn die Geschwindigkeitssensor-Informationen des Rades nicht korrekt sind (205),
   - Kontrollieren, ob die Differenz zwischen der empfangenen Informationen und der Fahrzeuggeschwindigkeit innerhalb der Grenzen bestimmter Toleranzen liegt, wenn die von dem Radgeschwindigkeitssensor erhaltenen Informationen korrekt sind (207),
   - Kontrollieren, ob es eine Abschätzung von den Hinterrädern gibt, wenn die erhaltene Information und die Fahrzeuggeschwindigkeit innerhalb der Grenzen bestimmter Fehlertoleranzen liegen (209),
   - Bestätigen, dass es keine Schätzung gibt, wenn keine Schätzung von den Hinterrädern vorliegt (211),
   - Vornehmen einer Schätzung nur von Hinterrädern wenn eine Schätzung von Hinterrädern vorliegt (213),
   - Zusammenfassen der Vorder-und Hinterräder-Schätzungen in gewissem Ausmaß wenn der Unterschied zwischen der erhaltenen Information und der Fahrzeugspeed innerhalb der Grenzen bestimmter Fehlertoleranzen ist,
   - Empfangen der Schätzung über die Gierwinkelgeschwindigkeit von den Vorderrädern (202),
   - Kontrollieren, ob die richtige Information von dem Radgeschwindigkeitssensor erhalten ist (204),
   - Auslösen einer Fehlerwarnung hinsichtlich der Hinterräder, wenn die Geschwindigkeitssensor-Informationen des Rades nicht korrekt sind (206),
   - Kontrollieren, ob die Differenz zwischen der empfangenen Informationen und der Fahrzeuggeschwindigkeit innerhalb der Fehlertoleranz liegt, wenn die von dem Radgeschwindigkeitssensor erhaltenen Informationen korrekt sind (208),
   - Kontrollieren, ob eine Abschätzung von den Hinterrädern vorliegt, wenn der Unterschied zwischen erhaltener Information und der Fahrzeuggeschwindigkeit nicht innerhalb bestimmter Toleranzwerten liegt (210),
   - Bestätigen, dass es keine Schätzung gibt, wenn keine Schätzung von den Hinterrädern vorliegt (214),
   - Vornehmen der Schätzung nur von Vorderrädern wenn eine Schätzung von Vorderrädern vorliegt (212),
   - Zusammenfassen der Vorder-und Hinterräder-Schätzungen in gewissem Ausmaß wenn der Unterschied zwischen der erhaltenen Information und der Fahrzeugspeed innerhalb der Grenzen bestimmter Fehlertoleranzen ist (215),

2. Ein Gierwinkelgeschwindigkeitsmessverfahren (1) gemäß Anspruch 1, **dadurch gekennzeichnet, dass** der Verfahrensschritt des Empfangens einer Schätzung der Gierwinkelgeschwindigkeit aus den Hinterrädern (202) die folgenden Teilschritte umfasst;

   - Kontrollieren, ob Bremsen ausgeführt ist (300),
   - Schätzen der Gierwinkelgeschwindigkeit wenn es kein Bremsen vorliegt (301),
   - Nach der Schätzung der Gierwinkelgeschwindigkeit zum Anfang zurückgehen (305),
   - Berechnen der Werten von Längsgleitbewegung ($S_3$ und $S_4$) an den Hinterrädern wenn das Bremsen durchgeführt ist (302),
   - Schätzen der Gierwinkelgeschwindigkeit (304),
   - Nach der Schätzung der Gierwinkelgeschwindigkeit zum Anfang zurückgehen (305),

3. Ein Gierwinkelgeschwindigkeitsmessverfahren (1) gemäß Anspruch 1, **dadurch gekennzeichnet, dass** der Verfahrens schritt des Empfangens einer Schätzung der Gierwinkelgeschwindigkeit aus den Vorderrädern (201) die folgenden Teilschritte umfasst;

   - Kontrollieren, ob Bremsen ausgeführt ist (400),
   - Kontrollieren, ob es ein Rutschen gibt, wenn kein Bremsen vorliegt (401),
   - Schätzen der Gierwinkelgeschwindigkeit wenn es kein Rutschen vorliegt (403,1),
   - Nach der Schätzung der Gierwinkelgeschwindigkeit zum Anfang zurückgehen (406),
   - Berechnen der Werten von Längsgleitbewegung ($S_1$ und $S_2$) an den Vorderrädern wenn es Rutschen gibt (403,2),
   - Schätzen der Gierwinkelgeschwindigkeit (405),

- Nach der Schätzung der Gierwinkelgeschwindigkeit zum Anfang zurückgehen (406),
- Berechnen der $S_1$ und $S_2$-Werte wenn Bremsen durchgeführt ist (402),
- Schätzen der Gierwinkelgeschwindigkeit (404),
- Nach der Winkelgeschwindigkeits-Abschätzung zum Anfang zurückgehen (406),
- Berechnen der $S_1$ und $S_2$-Werte wenn Bremsen durchgeführt ist (402),

## Revendications

1. Procédé de lacet angulaire de mesure de la vitesse, permettant de sélectionner les roues dont la vitesse angulaire est l'information va être utilisée, **caractérisé** suivant les étapes suivantes:

   - réception de l'estimation de vitesse angulaire de lacet à partir des roues avant (201),
   - contrôle de l'information du capteur de vitesse de la roue (203),
   - avertissement de défaillance des roues avant si les informations du capteur de vitesse de la roue ne sont pas correctes (205),
   - contrôler si la différence entre les informations reçues et de la vitesse du véhicule est dans certaines tolérances, si les informations reçues du capteur de vitesse de roue sont corrects (207),
   - contrôler l'existence d'une estimation à partir des roues arrière si l'information reçue et l'information de vitesse du véhicule ne sont pas à l'intervalle de la certaine tolérance de défaut (209),
   - confirmer dans le cas où il n'y a pas d'estimation si il n'y a pas d'estimation de roues arrière (211),
   - faire une estimation à partir de seulement les roues arrière en cas d'estimation de roues arrière (213),
   - combiner les estimations de roues avant et arrière à une certaine mesure si la différence entre les informations reçues et la vitesse du véhicule est dans une certaine tolérance de défaut (215),
   - réception de l'estimation de vitesse angulaire de lacet des roues arrière (202),
   - Contrôler si l'information reçue par le capteur de vitesse de roue est correcte (204),
   - avertir la défaillance des roues arrière si les informations du capteur de vitesse de la roue ne sont pas correctes (206),
   - contrôler si la différence entre les informations reçues et la vitesse du véhicule est à l'intervalle de la tolérance de panne si les informations du capteur de vitesse de la roue sont correctes (208),
   - contrôler l'existence d'une estimation à partir des roues avant si la différence entre les informations reçues et la vitesse du véhicule n'est pas dans certaines valeurs de tolérance (210),
   - confirmer dans le cas où il n'y a pas d'estimation si il n'y a pas d'estimation de roues avant (214),
   - estimation seulement des roues avant s'il y a estimation des roues avant (212),
   - combiner les estimations de roues avant et arrière à une certaine mesure si la différence entre les informations reçues et la vitesse du véhicule se trouve dans les certaines tolérances de défauts (215).

2. Procédé de mesure de la vitesse angulaire de lacet (1) selon la revendication 1, **caractérisé en ce que** l'étape de réception de l'estimation de vitesse angulaire de lacet de roues arrière (202) comprend les sous-étapes suivantes:

   - contrôler si le freinage est effectué (300),
   - estimation de la vitesse angulaire de lacet si il n'y a pas de freinage (301),
   - revenir au début après l'estimation de la vitesse angulaire de lacet (305),
   - calcul des valeurs de glissement longitudinaux (S3 et S4) au niveau des roues arrière si le freinage est effectué (302),
   - estimation de la vitesse angulaire de lacet (304),
   - revenir au début après l'estimation de la vitesse angulaire (305).

3. Procédé de mesure de vitesse angulaire en lacet selon la revendication 1, **caractérisé en ce que** l'étape de réception de l'estimation de vitesse angulaire de lacet à partir des roues avant (201) comprend les sous-étapes suivantes:

   - contrôler si le freinage est effectué (400),
   - contrôler s'il dérape, s'il n'y a pas de freinage (401),
   - estimation de la vitesse angulaire de lacet, si il n'y a pas dérapage (403.1),
   - revenir au début, après l'estimation de vitesse angulaire (406),
   - calcul des valeurs de glissement longitudinales (S1 et S2) sur les roues avant s'il n'y a pas de dérapage (403.2),
   - estimation de la vitesse angulaire de lacet (405),
   - revenir au début, après l'estimation de vitesse angulaire (406),

- calcul des valeurs de S1 et S2 si le freinage est effectuée (402),
- estimation de la vitesse angulaire de lacet (404),
- revenir au début après l'estimation de vitesse angulaire (406).

Figure 1

Figure 2

Figure 3

Figure 4

Figure 5

Figure 6

Figure 7

Figure 8

Figure 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2003042790 A
- JP 2006088960 B
- WO 02058976 A